## Europäisches Patentamt
## European Patent Office
## Office européen des brevets

(19)

(11) Numéro de publication: **0 110 778**
**B1**

## FASCICULE DE BREVET EUROPÉEN

(12)

(45) Date de publication du fascicule du brevet: **22.07.87**

(51) Int. Cl.⁴: **G 01 T 3/00,** G 21 C 17/10

(21) Numéro de dépôt: **83402262.6**

(22) Date de dépôt: **23.11.83**

(54) Dispositif de mesure de la puissance dans un réacteur nucléaire.

(30) Priorité: **23.11.82 FR 8219599**

(43) Date de publication de la demande:
**13.06.84 Bulletin 84/24**

(45) Mention de la délivrance du brevet:
**22.07.87 Bulletin 87/30**

(84) Etats contractants désignés:
**BE DE GB IT SE**

(56) Documents cité:
**FR-A-2 170 109**
**FR-A-2 195 799**
**FR-A-2 382 015**
**FR-A-2 444 947**
**FR-A-2 458 878**
**GB-A-1 095 072**

(73) Titulaire: **ELECTRICITE DE FRANCE Service National, 2, rue Louis Murat, F-75008 Paris (FR)**

(72) Inventeur: **Jacquot, Jean- Paul, 234 rue Championnet, F-75018 Paris (FR)**
Inventeur: **Guillery, Patrick, 16 bis rue Diderot, F-78100 St Germain en Laye (FR)**

(74) Mandataire: **Fort, Jacques, CABINET PLASSERAUD 84, rue d'Amsterdam, F-75009 Paris (FR)**

EP 0 110 778 B1

## Description

La présente invention concerne la mesure de la puissance thermique dégagée localement dans le coeur d'un réacteur nucléaire par des moyens basés sur deux principes physiques complémentaires, éventuellement complétée par la mesure de la température locale du réfrigérant.

On connaît déjà (FR-A-2 420 827) un dispositif de mesure de la puissance locale en un emplacement situé dans le coeur d'un réacteur nucléaire, dispositif comprenant un corps absorbant les rayonnements gamma placé audit emplacement et un thermocouple ayant deux jonctions dont l'une est disposée de façon à être portée à la température du corps et dont l'autre est à une température de référence, directement liée à la température du réfrigérant du réacteur audit emplacement lors du fonctionnement stabilisé du réacteur. Les jonctions sont reliées à l'extérieur par des fils conducteurs isolés, généralement placés dans une gaine métallique qui traverse la cuve du réacteur. Ce dispositif est couramment dénommé "thermomètre gamma".

Le signal de sortie du thermocouple différentiel du dispositif fournit un signal représentatif de la puissance dégagée par le combustible du coeur à l'emplacement de mesure. Mais ce signal présente une constante de temps longue et corrélativement une bande passante limitée. Dans la pratique, il n'est pas possible de détecter les fluctuations ou vibrations à des fréquences supérieures à 1 Hz environ. Or, la connaissance de telles fluctuations présente un intérêt certain pour la surveillance et le fonctionnement du réacteur.

L'invention vise notamment à fournir un dispositif dans lequel la limitation ci-dessus est dans une large mesure écartée et qui, au surplus, peut être réalisé de façon à permettre la prise en compte du flux neutronique.

L'approche adoptée dans ce but consiste à rendre le dispositif capable d'assurer également les fonctions de l'appareil fréquemment appelé "collectron" ou désigné par l'abréviation SPND (Self Power Neutron Detector), en utilisant le fait que, dans les flux neutronique et gamma du coeur, un courant électrique apparaît entre une gaine et un conducteur isolé qu'elle contient. Un dispositif suivant l'invention comprend en conséquence un thermomètre gamma tel que défini ci-dessus, conforme à la partie caractérisante de la revendication 1.

Les fils des thermocouples de chaque thermomètre gamma sont eux-mêmes le siège d'un effet collectron représentant l'intégrale du flux neutronique et gamma au droit du thermocouple associé au thermomètre gamma. Pour permettre la mesure locale de la puissance au droit d'un élément sensible bien localisé en écartant l'effet dû aux fils, le dispositif suivant l'invention utilise avantageusement un thermocouple à trois fils.

En général, plusieurs dispositifs du genre défini ci-dessus seront insérés dans un même canal traversant la paroi de la cuve, leurs thermocouples étant à des niveaux différents.

Par un choix approprié des constituants du dispositif, et en particulier de la nature d'un élément localisé s'ajoutant aux fonctions du thermocouple et logé dans la même gaine, on peut rendre le dispositif sensible à un rayonnement déterminé (neutrons ou rayonnement gamma) et sélectionner la bande passante et ajuster ainsi la bande passante. L'utilisation d'un élément sensible en platine permet par exemple d'étendre la bande passante du dispositif dans son ensemble, tout en n'utilisant que des rayonnements gamma.

La mise en oeuvre de l'invention ne se heurte pas à des difficultés technologiques particulières: on sait en effet réaliser des thermocouples multifils, multijonctions de faible diamètre de gaine de protection. On voit que l'invention présente une grande souplesse d'emploi puisqu'elle permet d'obtenir deux mesures distinctes des flux neutroniques et gamma ainsi qu'une mesure de température.

L'invention sera mieux comprise à la lecture de la description qui suit d'un dispositif qui en constitue un mode particulier de réalisation, donné à titre d'exemple non limitatif.

La description se réfère au dessin qui l'accompagne, dans lequel:

la Figure 1 est une vue en coupe très simplifiée montrant un réacteur nucléaire susceptible d'être équipé d'un dispositif suivant l'invention;

la Figure 2 est une vue de détail en coupe montrant un fragment d'un thermomètre gamma faisant partie du dispositif suivant l'invention;

la Figure 3 est un schéma de principe d'un dispositif suivant l'invention intégrant un thermomètre gamma et un collectron.

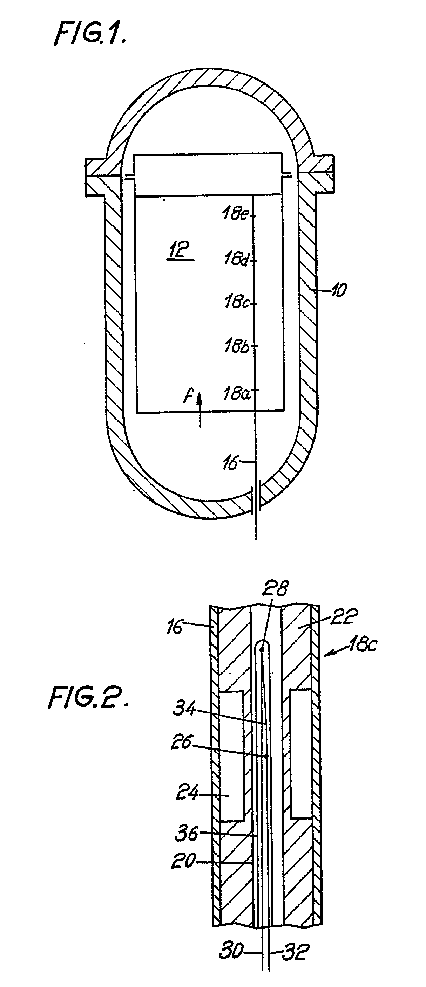

On a montré sur la figure 1 la cuve 10 d'un réacteur nucléaire qu'on supposera, par la suite, être du type à eau sous pression. Cette cuve contient le coeur 12 du réacteur, constitué d'assemblages de combustible juxtaposés, contenant chacun un faisceau d'aiguilles de combustible verticales. Le coeur est parcouru par un courant ascendant d'eau sous pression constituant le réfrigérant, indiqué schématiquement par la flèche f.

Tout réacteur nucléaire doit être muni de dispositifs de mesure du flux neutronique et/ou de la puissance locale en divers emplacements du coeur. Un dispositif particulièrement bien adapté à la mesure de la puissance locale est constitué par celui couramment dénommé "thermomètre gamma", dont on pourra trouver une description dans le document FR-A-2 420 827 déjà mentionné. Ce dispositif comporte, dans un même canal 16 qui traverse la cuve du réacteur et pénètre dans le coeur, plusieurs thermocouples de mesure, dont les emplacements sont désignés par 18a, 18b,... 18e sur la figure.

En chacun des emplacements de mesure est placé un thermocouple dont un est montré en Figure 2. Ce thermocouple est situé dans un trou central 20 du corps absorbant le rayonnement gamma 22. Ce corps, de forme cylindrique, est enserré par un tube constituant le canal 16. En chacun des emplacements 18a,... 18e, un évidement 24 est ménagé dans le corps 22. Cet évidement constitue une brèche dans le trajet d'écoulement de chaleur du corps 22 vers le tube 16 et le réfrigérant. L'une des jonctions 26 du thermocouple est placée sensiblement au niveau du milieu de la brèche 24, tandis qque l'autre jonction 28 est placée à un niveau adjacent à celui de la brèche, où l'écoulement de chaleur depuis le corps 22 est sensiblement radial.

Les deux jonctions 26 et 28 peuvent être réalisées de la façon suivante: deux fils isolés 30 et 32 en un métal constituant un premier composant d'un couple thermo-électrique (Chromel par exemple) sont amenés depuis l'extérieur jusqu'aux jonctions 26 et 28. Un tronçon 34 d'un métal constituant l'autre composant du couple (Alumel par exemple) est relié par soudure aux fils 30 et 32, pour constituer les jonctions 26 et 28.

Les fils 30 et 32 ainsi que les jonctions sont disposés dans une gaine métallique de protection 36, généralement en acier inoxydable. Cette gaine est en général occupée par une masse pulvérulente d'isolant minéral, choisi pour n'être pas dégradé par les rayonnements à l'intérieur du coeur.

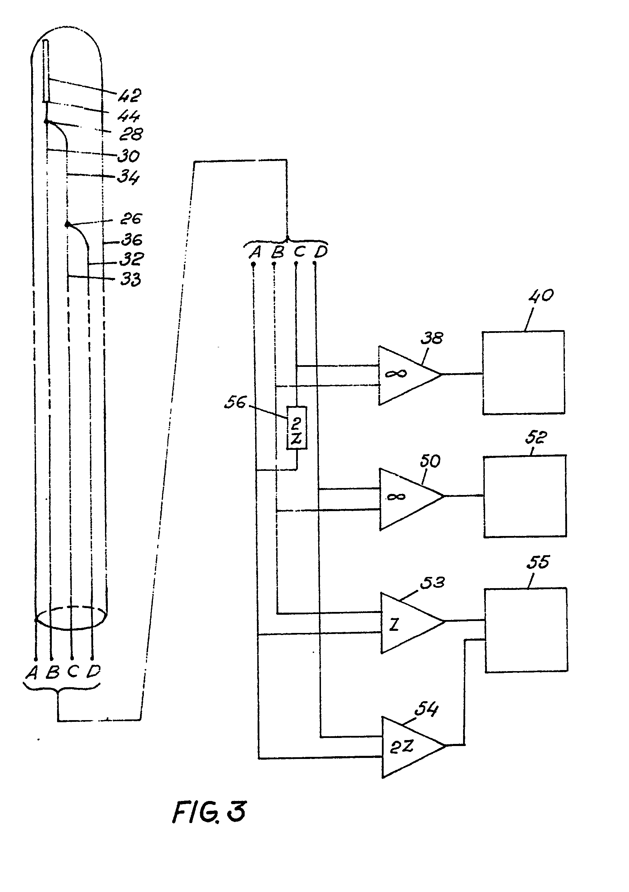

Les fils 30 et 32 sont réunis, à l'extérieur du coeur, à un ensemble de mesure de la tension fournie par le thermocouple différentiel, schématisé sur la Figure 3 par un amplificateur de tension 50 et un appareil de mesure 52.

Cet ensemble constitue, avec le thermocouple, un thermomètre gamma et fournit un signal de mesure de puissance locale.

Un second ensemble de mesure, similaire au premier, fournit un signal de mesure de la température absolue de la jonction froide 28. Il comporte encore un amplificateur de tension 38 et un appareil de mesure 40. Les entrées de l'amplificateur 38 sont reliées l'une au fil 32, l'autre à un fil 33, de même nature que le tronçon 34 et raccordé à la jonction 28.

A chaque couple thermo-électrique situé au droit d'un évidement 24 est associé, de la même façon, un ensemble de mesure. On peut ainsi déterminer la puissance thermique locale en de nombreux emplacements du coeur et en déduire la répartition de puissance.

Les éléments du dispositif décrit jusqu'ici ont une constitution générale connue, permettant de déterminer la puissance moyenne en régime stabilisé. Mais la bande passante est limitée.

Le dispositif suivant l'invention utilise le courant réparti qui apparaît entre la gaine 36 et un élément sensible 42, ou émetteur. Cet élément 42 est par exemple un tronçon de fil de platine connecté électriquement au fil 30, au point 44.

Ce courant est mesuré par un amplificateur de courant 53, d'impédance d'entrée Z, monté entre le fil 30 et la gaine 36. Pour compenser le courant collectron dû aux fils et qui représente l'intégrale du flux neutronique et gamma coupé par les divers fils du thermocouple, un deuxième courant collectron est mesuré entre le fil 32 et la gaine 36. Ce courant est mesuré par un amplificateur de courant 54 dont l'impédance d'entrée est 2Z. Les amplificateurs 53 et 54 sont connectés à des moyens de calcul 55 qui calculent le signal collectron pur dû à l'émetteur 42 par une formule approchée du type: $I = 4 (I_1 - I_2)$ où $I$ est le courant collectron pur dû à l'élément 42, alors que $I_1$ est le courant mesuré entre le fil 30 et la gaine 36 et $I_2$ le courant mesuré entre le fil 32 et la gaine 36.

Afin que le montage soit équilibré, une résistance de charge 56 d'impédance 2Z est placée entre le fil 33 (de même nature que le tronçon 34, Alumel par exemple) et la gaine 36. Au lieu du montage suivant la Figure 3, à quatre amplificateurs, on peut utiliser un montage simplifié comportant des commutateurs permettant de faire l'une ou l'autre des mesures.

Les moyens de calcul 40, 52 et 55 sont numériques ou analogiques et peuvent être prévus pour fournir des indications supplémentaires. En particulier, les signaux fournis par les amplificateurs 38 et 50 peuvent être utilisés afin d'obtenir la température du réfrigérant et le flux gamma corrigé, suivant le procédé décrit et revendiqué dans la demande de brevet EP-A-110 779, mettant en oeuvre un élément chauffant.

Le dispositif permet de plus de mesurer simultanément et en un même point les flux gamma et neutronique par l'utilisation d'un émetteur 42 approprié, en rhodium ou vanadium par exemple. Les moyens de calcul 52 et 55 peuvent alors être couplés de manière à établir des corrélations entre les signaux d'origine gamma et neutronique. Enfin, le dispositif peut être utilisé pour mesurer le flux gamma par des moyens basés sur deux principes physiques différents en utilisant un émetteur 42 en platine, par exemple, on obtient un dispositif n'utilisant que des sources gamma, mais dont la bande passante s'étend sur plusieurs centaines de Hertz grâce au signal délivré par l'émetteur 42, dans la mesure où les amplificateurs 53 et 54 ainsi que les moyens de calcul 55 ont une bande passante suffisante. Ces moyens de calcul 55 peuvent être prévus pour effectuer divers traitements, par exemple:

- Une analyse spectrale du signal correspondant au collectron, dans le but d'obtenir un spectre de puissance du bruit collectron représentatif de phénomènes vibratoires (par exemple les vibrations mécaniques du coeur). Une analyse spectrale simultanée de deux voies permet, par mesure de déphasage, d estimer la vitesse du réfrigérant. Les moyens 55 peuvent alors comporter par exemple un analyseur spectral à transformée de Fourier rapide, ou FFT, tel que l'analyseur INTERTECHNIQUE IN 110 ou NICOLET SCIENTIFIC 660.

- Le suivi rapide des flux, dans le but d'utiliser le dispositif dans les chaînes de protection habituellement installées sur les réacteurs nucléaires.

## Revendications

1. Dispositif de mesure de la puissance locale en un emplacement situé dans le coeur d'un réacteur nucléaire, comprenant un corps absorbant les rayonnements gamma placé audit emplacement et un thermocouple ayant deux jonctions (26, 28) dont l'une est disposée de façon à être portée à la température du corps et dont l'autre est à une température de référence, directement liée à la température du réfrigérant du réacteur audit emplacement lors du fonctionnement stabilisé du réacteur, les jonctions étant reliées à l'extérieur par des fils conducteurs isolés de sortie placés dans une gaine métallique qui traverse la cuve du réacteur, caractérisé en ce qu'il comprend des moyens (53, 55) placés à l'extérieur du réacteur pour mesurer le courant total circulant entre l'un au moins des fils de sortie (30, 32) et la gaine (36) sous l'action des flux neutronique et gamma dans le coeur et comprend de plus un émetteur (42) connecté à l'un des fils, à l'emplacement de mesure, lesdits moyens de mesure (53, 55) étant prévus pour mesurer le courant entre la gaine (36) et ce fil.

2. Dispositif selon la revendication 1, caractérisé en ce que l'émetteur (42) est en un matériau, tel que le platine, fournissant un courant collectron fonction essentiellement du rayonnement gamma.

3. Dispositif selon la revendication 2, caractérisé en ce que les moyens de mesure sont prévus pour soumettre le signal de courant correspondant au collectron, à analyse transitoire et analyse spectrale sur une bande s'étendant sur plusieurs centaines de Hertz.

4. Dispositif selon la revendication 1, caractérisé en ce que l'émetteur (42) est en un matériau, tel que rhodium ou vanadium, fournissant un courant collectron fonction du rayonnement neutronique.

5. Dispositif selon la revendication 4, caractérisé en ce que les moyens de mesure sont prévus pour effectuer une corrélation entre les signaux représentatifs des flux de rayonnement gamma et neutronique au même emplacement.

6. Dispositif selon l'une quelconque des revendications 1 à 5, caractérisé en ce qu'il comprend un fil de sortie supplémentaire (33) relié à la jonction (24) à la température du réfrigérant, en un matériau de même nature que celui qui relie les deux jonctions, et en ce que les moyens de mesure (38, 40, 50-55) sont prévus pour mesurer les signaux de sortie des thermocouples ainsi constitués et les courants entre le fil supplémentaire et la gaine.

7. Dispositif selon l'une quelconque des revendications précédentes, caractérisé en ce qu'il comporte plusieurs thermocouples disposés à des niveaux différents.

## Patentansprüche

1. Vorrichtung zur Messung der lokalen Leistung an einem im Kern eines Kernreaktors befindlichen Ort, mit einem an diesem Ort angeordneten, die Gamma-Strahlung absorbierenden Körper und mit einem Thermoelement einschließlich Verbindungsstellen (26, 28), von denen die eine derart angeordnet ist, daß sie auf die Temperatur des Körpers gebracht wird, und von denen die andere sich auf einer Bezugstemperatur befindet, die mit der Temperatur des Reaktorkühlmittels an dem genannten Ort während des stabilen Reaktorbetriebs unmittelbar verbunden ist, wobei die Verbindungsstellen mit der Außenseite durch isolierte Ausgangsdrähte verbunden sind, die sich in einer metallischen Hülse befinden, die den Kern des Reaktors durchquert, gekennzeichnet durch außerhalb des Reaktors angeordnete Mittel (53, 55) zur Messung des Gesamtstromes, der zwischen wenigstens dem einen der Ausgangsdrähte (30, 33) und der Hülle (36) unter der Wirkung der Neutronen- und Gammaflüsse im Kern zirkuliert, und durch einen Emitter (42), der an der Meßstelle mit dem einen der Drähte verbunden ist, wobei die Meßmittel (53, 55) durch die Messung des Stromes zwischen der Hülle (36) und diesem Draht vorgesehen sind.

2. Vorrichtung nach Anspruch 1, dadurch gekennzeichnet, daß der Emitter (42) aus einem Material, wie Platin, besteht, das im wesentlichen in Abhängigkeit von der Gamma-Strahlung einen Kollektronstrom liefert.

3. Vorrichtung nach Anspruch 2, dadurch gekennzeichnet, daß die Meßmittel vorgesehen sind, um das dem Kollektron entsprechende Stromsignal einer Übergangsanalyse und einer Spektralanalyse auf einem Band zu unterwerfen, das sich über mehrere 100 Hertz erstreckt.

4. Vorrichtung nach Anspruch 1, dadurch gekennzeichnet, daß der Emitter (42) aus einem Material, wie Rhodium oder Vanadium, besteht, das in Abhängigkeit von der Neutronenstrahlung einen Kollektronstrom liefert.

5. Vorrichtung nach Anspruch 4, dadurch gekennzeichnet, daß die Meßmittel vorgesehen sind, um eine Wechselbeziehung zwischen den die Gamma- und Neutronen-Strahlungsflüsse an ein und demselben Ort darstellenden Signalen herzustellen.

6. Vorrichtung nach einem der Ansprüche 1 bis 5, gekennzeichnet

durch einen zusätzlichen Ausgangsdraht (33), der mit der auf der Kühlmitteltemperatur befindlichen Verbindungsstelle (24) verbunden ist und aus einem Material derselben Art wie dasjenige besteht, das die beiden Verbindungsstellen verbindet, und dadurch gekennzeichnet, daß die Meßmittel (38, 40, 50 und 55) vorgesehen sind zur Messung der Ausgangssignale der auf diese Weise gebildeten Thermoelemente und der Ströme zwischen dem zusätzlichen Draht und der Hülle.

7. Vorrichtung nach einem der vorhergehenden Ansprüche,

gekennzeichnet

durch mehrere auf unterschiedlichen Niveaus angeordnete Thermoelemente.

**Claims**

1. Device for measuring the local power at a location within the core of a nuclear reactor, comprising a gamma ray absorbing body located at said location and a thermocouple having two junctions (26, 28) one of which is arranged for being at the temperature of the body and the other of which is at a reference temperature which is directly related to the temperature of the reactor coolant at said location during steady operation of the reactor, the junctions being connected to the outside by output insulated conducting wires located in a metal sheath which projects across the reactor vessel, characterized in that it comprises means (53, 55) located outside of the reactor for measuring the total current which flows between one at least of the output wires (30, 32) and the sheath (36) subjected to the neutron and gamma fluxes within the core and in that it further comprises an emitter (42) connected to one of the wires, at the measurement location, the measurement means (53, 55) being arranged for measuring the current between the sheath (36) and that wire.

2. Device according to claim 1, characterized in that the emitter (42) is of a material, such as platinum, which delivers a collectron current which essentially depends on gamma radiation.

3. Device according to claim 2, characterized in that the measurement means are arranged for subjecting the electrical current signal corresponding to the collectron to a transitory analysis and spectrum analysis in a range extending over several hundred Hertz.

4. Device according to claim 1, characterized in that the emitter (42) is of a material, such as rhodium or vanadium, which delivers a collectron current which depends on the neutron radiation.

5. Device according to claim 4, characterized in that the measurement means are arranged for correlation between the signals which represent the neutron flux and gamma ray flux at the same location.

6. Device according to any one of claims 1 - 5, characterized in that it comprises an additional output wire (33) connected to that junction (24) which is at the temperature of the coolant, of a material having the same nature as that which connects the two junctions and in that the measurement means (38, 40, 50 - 55) are arranged for measuring the output signals of the thermocouples so constituted and the currents between the additional wire and the sheath.

7. Device according to any one of the preceding claims, characterized in that it comprises a plurality of thermocouples located at different levels.

FIG.1.

FIG.2.

FIG. 3

3